# EUROPÄISCHE PATENTANMELDUNG

(11) **EP 4 718 710 A1**
(43) Veröffentlichungstag der Anmeldung: **01.04.2026**
(21) Anmeldenummer: 24203643.2
(22) Anmeldetag: 30.09.2024
(51) Int. Cl.: H02P 6/16, G01D 5/244, G01D 18/00, H02K 11/21, H02K 29/06

(54) **MOTORGEBER MIT SPEICHER FÜR KORREKTURPARAMETER, ANTRIEB UND ANTRIEBSSTEUERUNG MIT DEM MOTORGEBER**

(71) Anmelder: Siemens Aktiengesellschaft, 80333 München (DE)
(72) Erfinder: Braun, Matthias, 97711 Weichtungen (DE); Burger, Christian, 97618 Unsleben (DE); Kurz, Jürgen, 90562 Heroldsberg (DE); Reimann, Christian, 90480 Nürnberg (DE); Schäfers, Elmar, 90763 Fürth (DE); Schür, Torsten, 91058 Erlangen (DE)
(74) Vertreter: Siemens Patent Attorneys

(57) **Zusammenfassung**

Die Erfindung betrifft einen Antriebssteuerung mit einem Motorgeber (DSR) und einem Umrichter (CVT) , wobei der Motorgeber (DSR) ausgebildet ist, Rohmesswerte (RSG) einer Winkellage (AGL) einer Rotorwelle (DRS) eines Antriebs (DRV) zu ermitteln. Es wird vorgeschlagen, der Motorgeber (DSR) einen integrierten Speicher (MEM) aufweist,
wobei in dem Speicher (MEM) Korrekturparameter (CRP) zur Korrektur der Winkellage (AGL) gespeichert sind,
wobei die Antriebssteuerung (DCR) einen Prozessor (CPU) aufweist,
wobei der Speicher (MEM) und der Prozessor (CPU) miteinander ein Funktionsmodul (FMD) ausbilden,
wobei das Funktionsmodul (FMD) derart ausgebildet und vorbereitet ist, dass der Prozessor (CPU) die Rohmesswerte (RSG) des Motorgebers (DSR) mittels der Korrekturparameter (CRP) und einer Korrekturfunktion (CRF) zu korrigierten Winkellagen (AGL) umrechnet und die Antriebssteuerung (DCR) auf Basis der korrigierten Winkellagen (AGL) den Antrieb (DRV) steuert.

## Beschreibung

Die vorliegende Erfindung betrifft einen Motorgeber für eine Antriebssteuerung mit einem Umrichter, wobei der Motorgeber ausgebildet ist, Rohmesswerte einer Winkellage einer Rotorwelle eines Antriebs zu ermitteln. Weiterhin betrifft die Erfindung eine Antriebssteuerung mit einem Motorgeber und einem Umrichter, wobei der Motorgeber ausgebildet ist, Rohmesswerte einer Winkellage einer Rotorwelle eines Antriebs zu ermitteln. Weiterhin betrifft die Erfindung einen Antrieb umfassend eine entsprechende Antriebssteuerung.

Ein Motorgeber, auch bekannt als Drehzahlsensor, Lagegeber, ist ein elektronisches Bauteil, das in der Regel in einem Motor verwendet wird, um Informationen über die Drehzahl und Position der Rotorwelle zu erfassen. Hierbei bezieht sich die Position hauptsächlich auf die Winkellage der Rotorwelle, also der Winkel der Lage der Rotorwelle bezüglich einer Drehung um die der Rotorwelle im regulären Betrieb angedachte Drehachse.

Der Motorgeber besteht in der Regel aus einem Sensor und einer Maßverkörperung, die in der Regel als ein Magnetring oder eine Zahnscheibe, die unmittelbar oder mittelbar an der Rotorwelle befestigt ist, ausgebildet ist. Der Begriff Maßverkörperung wird vorliegend deswegen gewählt, weil dieses Bauteil das Winkelinkrement der Messung gegenständlich verkörpert, beispielsweise mittels der Abstände der Zähne bei einer Zahnscheibe. Der Sensor erfasst die beispielsweise magnetischen oder zahnradbasierten Signale des Magnetrings oder der Zahnscheibe, wenn diese an ihm vorbeibewegt werden. Diese Signale werden dann in elektrische Impulse umgewandelt und an eine Antriebssteuerung weitergeleitet.

Die Antriebssteuerung verwendet die Informationen des Motorgebers, um den Motorbetrieb zu überwachen und zu steuern. Die Antriebssteuerung regelt vor allem die Drehzahl, so dass unter Last dem Antrieb die erforderliche Energie zugeführt wird, die Solldrehzahl umzusetzen. Durch die genaue Erfassung der Drehzahl und Rotorposition ermöglicht der Motorgeber eine präzise Steuerung des Antriebs und trägt zur Verbesserung der Leistung und Effizienz bei.

Motorgeber können beispielsweise in Elektromotoren verwendet werden, um Informationen über die Rotorposition oder Drehzahl zu erfassen. Diese Informationen können dazu dienen, die Steuerung und Regelung des Elektromotors zu optimieren, die Effizienz zu verbessern oder Sicherheitsfunktionen zu ermöglichen.

Darüber hinaus finden Motorgeber Anwendung in verschiedenen industriellen Maschinen, Robotern, Präzisionsgeräten und anderen Systemen, bei denen die genaue Messung der Rotationsbewegung oder Position von entscheidender Bedeutung ist.

Es gibt verschiedene Arten von Motorgebern, die je nach Anwendung variieren können. Dazu gehören beispielsweise optische oder magnetische Sensoren, die die Bewegung oder Position eines Rotors erfassen können, sowie induktive oder kapazitive Sensoren, die Informationen über die Rotationsbewegung oder Position liefern können.

Insgesamt werden Motorgeber in einer Vielzahl von Motoren und Anwendungen eingesetzt, bei denen die genaue Messung der Lage oder Drehzahl von Rotationskomponenten erforderlich ist.

Die Genauigkeit der Lagebestimmung, die durch den Motorgeber erreicht wird, kann je nach Art des Sensors und der spezifischen Anwendung variieren. In der Regel ist die Lagebestimmung sehr präzise und kann eine hohe Auflösung bieten.

Es ist jedoch wichtig zu beachten, dass die Genauigkeit der Lagebestimmung nicht nur vom Motorgeber selbst abhängt, sondern auch von anderen Faktoren wie der Signalverarbeitung im Antriebssteuerung, der Qualität der elektrischen Verbindungen und möglichen Störungen oder Ungenauigkeiten im Betrieb des Motors. Daher können die tatsächlichen Genauigkeitswerte je nach den spezifischen Umständen und der Qualität der Komponenten variieren.

Aus der EP 3 669 241 B1 ist bereits eine Antriebssteuerung eingangs beschriebener Art bekannt. Während eines Sonderbetriebs des Antriebs ist nach EP 3 669 241 B1 vorgesehen, dass die Rotorwelle auf eine bestimmte Anfangsdrehzahl beschleunigt wird und danach kraftlos austrudelt, um Lagemesswerte zu gewinnen, die der Ermittlung von Korrekturgrößen für die Lagebestimmung benutzt werden. Die Erfindung verfolgt bezüglich der Bestimmung der Korrekturparameter zumindest teilweise den gleichen Ansatz. Hinsichtlich der Ermittlung der Korrekturparameter wird der Fachmann auf die Offenbarung der EP 3 669 241 B1 verwiesen, sofern die vorliegende Offenbarung nicht explizit eine andere Vorgehensweise anleitet.

Der Stand der Technik, auch die Vorgehensweise nach der EP 3 669 241 B1 ist jedoch auch teilweise nachteilhaft. Einige Nachteile und Einschränkungen sind:
- Eine Kalibrierung des Motorgebers erfolgt nur in Kombination mit dem Umrichter im fertig eingebauten Zustand,
- Der Motorgeber liefert von sich aus zunächst signifikant fehlerbehaftete Werte, weil die Ablage der Korrekturgrößen in dem Stand der Technik in einem Korrekturgrößenspeicher der Antriebssteuerung vorgesehen - also im Umrichter,
- Im Falle eines Austauschs des Motors müssen die Korrekturgrößen neu ermittelt, werden,
- Ein Zugriff des Umrichters bzw. der Antriebssteuerung auf den Motorgeber ist ein Sicherheitsrisiko, das in Abhängigkeit von der Anwendung technisch nicht akzeptabel ist.

Aufgabe der vorliegenden Erfindung ist es deshalb, eines der oben genannten Probleme zu adressieren, den allgemeinen Stand der Technik zu verbessern und eine Alternative zu bisher Bekanntem bereitzustellen.

Zur Lösung der Aufgabe wird erfindungsgemäß ein Motorgeber, eine Antriebssteuerung und ein Antrieb der eingangs genannter Art vorgeschlagen, die erfindungsgemäß weitergebildet sind.

Im Einzelnen wird vorgeschlagen, dass der Motorgeber einen integrierten Speicher aufweist, wobei in dem Speicher erste Korrekturparameter zur Korrektur der Winkellage mittels einer ersten Korrekturfunktion gespeichert sind.

Eine vorteilhafte Weiterbildung sieht vor, dass der Motorgeber eine Maßverkörperung zur Montage an der Rotorwelle aufweist, und einen Sensor aufweist zur Bestimmung der Winkellage der Rotorwelle mittels der Maßverkörperung, wobei der Motorgeber ein Motorgeberlager und eine Geberwelle aufweist, wobei das Motorgeberlager eine erste Drehachse der Geberwelle festlegt, wobei an der Geberwelle die Maßverkörperung angebracht ist, wobei die ersten Korrekturparameter vorgesehen sind, nur einen aufgrund eines Versatzes der ersten Drehachse der Maßverkörperung zu dem Sensor verursachten Fehler der Bestimmung der Winkellage mittels der ersten Korrekturfunktion zu kompensieren.

Vorgeschlagen wird weiterhin eine Antriebssteuerung mit einem derartigen Motorgeber wobei die Antriebssteuerung einen Prozessor aufweist, wobei der Speicher und der Prozessor miteinander ein Funktionsmodul ausbilden, wobei das Funktionsmodul derart ausgebildet und vorbereitet ist, dass der Prozessor die Rohmesswerte des Motorgebers mittels der ersten Korrekturparameter und der ersten Korrekturfunktion zu korrigierten Winkellagen umrechnet und die Antriebssteuerung auf Basis der korrigierten Winkellagen den Antrieb steuert..

Vorgeschlagen wird weiterhin ein Antrieb mit einer Antriebssteuerung nach Anspruch 3, wobei die Geberwelle an dem Motorgeber mit der Rotorwelle drehsteif verbunden ist, wobei die Rotorwelle entlang einer zweiten Drehachse drehbar gelagert ist, wobei die erste Drehachse und die zweite Drehachse zueinander einen Versatz aufweisen, wobei zweite Korrekturparameter in einem zweiten Speicher abgespeichert sind, wobei die zweiten Korrekturparameter vorgesehen sind, nur einen aufgrund des Versatzes der zweiten Drehachse zu der ersten Drehachse verursachten Fehler der Bestimmung der Winkellage der Rotorwelle mittels einer zweiten Korrekturfunktion zu kompensieren.

Vorzugsweise wird vorgeschlagen, der Motorgeber eine Maßverkörperung zur Montage an der Rotorwelle aufweist, und einen Sensor aufweist zur Bestimmung der Winkellage der Rotorwelle mittels der Maßverkörperung.

Vorzugsweise wird vorgeschlagen, dass das Kalibriermodul derart ausgebildet ist, dass für die Aktivierung des Kalibriermodus des Kalibriermodul ein für die Kalibrierung geeigneter Betriebszustand des Antriebs als eine notwendige Bedingung erfüllt sein muss.

Vorzugsweise wird vorgeschlagen, dass das Funktionsmodul derart ausgebildet ist, dass für die Aktivierung des Kalibriermodus des Funktionsmoduls ein für die Kalibrierung geeigneter Betriebszustand des Antriebs als eine notwendige Bedingung erfüllt sein muss.

Vorzugsweise wird vorgeschlagen, dass der geeignete Betriebszustand vorsieht, dass der Antrieb auf eine Drehzahl oberhalb einer Mindestdrehzahl beschleunigt wird und die Antriebssteuerung derart parametriert ist, dass während der Kalibrierung von der Antriebssteuerung keine Krafteinflüsse auf die Rotorwelle veranlasst werden.

Vorzugsweise wird vorgeschlagen, dass die Antriebssteuerung während der Kalibrierung anhand der jeweiligen Rohmesswerte jeweils prüft, ob eine aktuelle Drehzahl der Rotorwelle eine Minimaldrehzahl erreicht oder unterschreitet, und bei Erreichen oder Unterschreiten der Minimaldrehzahl das Ermitteln und Zwischenspeichern der Rohmesswerte beendet und der Prozessor die zweiten Korrekturparameter aus den bis dahin gemessenen Rohmesswerten ermittelt.

Im Folgenden ist die Erfindung anhand eines speziellen Ausführungsbeispiels zur Verdeutlichung näher beschrieben. Es zeigen:
Figur 1: eine schematische, vereinfachte Darstellung eines Antriebs umfassend eine Antriebssteuerung und einen Motorgeber nach der Erfindung,

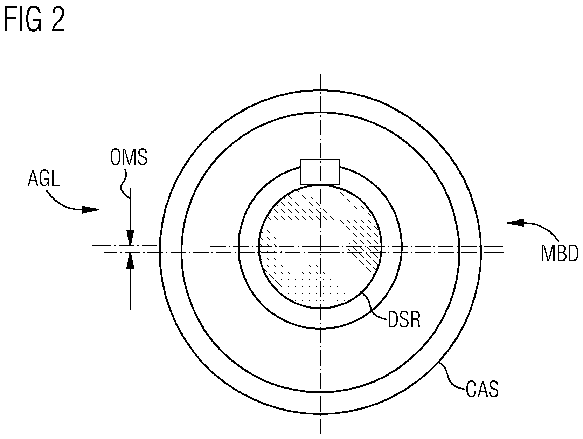

Figur 2: ein Schnitt-Detail, das in der Figur 1 als II-II ausgewiesen ist,
Figur 3: ein Ablaufdiagramm, dass die kaskadierte Fehlerkorrektor nach der Erfindung illustriert,
Figuren 4 und 6: jeweils eine Darstellung des Motorgeberfehlers über die Zeit,
Figur 5: eine Spektralanalyse des Motorgeberfehlers.

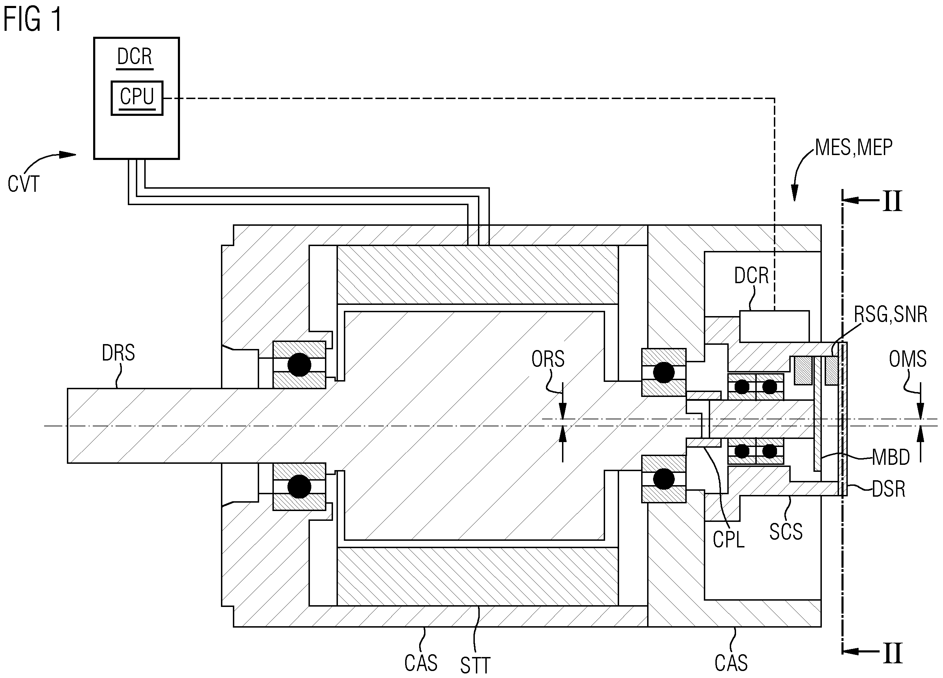

Figur 1 zeigt einen Antrieb DRV mit einer Antriebssteuerung DCR umfassend einen Motorgeber DSR und einen Umrichter CVT. Der Motorgeber DSR ist ausgebildet, zunächst Rohmesswerte RSG einer Winkellage AGL einer Rotorwelle DRS eines Antriebs DRV zu ermitteln. Der Motorgeber DSR weist eine Maßverkörperung MBD zur Montage an der Rotorwelle DRS auf. Mittels der Maßverkörperung MBD misst ein Sensor SNR die Winkellage AGL der Rotorwelle DRS.

Die Maßverkörperung MBD ist mittels einer Geberwelle IME an der Rotorwelle DRS angebracht. Der Motorgeber DSR weist ein eigenes Motorgebergehäuse SCS auf, das an einem Gehäuse CAS des Antriebs DRV angebracht ist. Die Geberwelle IME des Motorgeber DSR, die zwischen der Rotorwelle DRS und der Maßverkörperung MBD als mechanische Übertragungselement dient, ist mittels einer Kupplung CPL drehsteif an der Rotorwelle DRS angebracht und mittels eines Motorgeberlagers BDS annähernd koaxial zu der Rotorwelle DRS in dem Motorgebergehäuse SCS drehbar gelagert.

Eine Fehlerquelle bei der Ermittlung der Winkellage AGL ist ein Versatz OMS der Maßverkörperung MBD zu der ersten Drehachse AXP der Geberwelle IME, derart, dass die Maßverkörperung MBD nicht zentrisch zu der ersten Drehachse AXP angebracht ist und dementsprechend auch zu dem ortsfest angebrachten Sensor SNR in der Distanz über den Umlauf variiert. In anderen Worten - die Maßverkörperung MBD eiert oder taumelt während der Umdrehung. Diese Fehlerquelle ist intern des Motorgebers DSR.

Eine weitere Fehlerquelle ist ein Versatz ORS der zweiten Drehachse der Rotorwelle DRS zu der eine erste Drehachse AXP der Geberwelle IME des Motorgebers DRS. Dieser Versatz ist im Rahmen der technischen Genauigkeit kaum vermeidlich und verfälscht die Ermittlung der Winkellage AGL durch den Motorgeber DSR.

Die erstgenannte Fehlerquelle wird nach der Erfindung mit einer Fehlerkorrektur behandelt, die gegenständlich dem Motorgeber DSR zugeordnet ist. Der Motorgeber DSR weist einen integrierten ersten Speicher MEP auf. Dieser erste Speicher MEP ist an dem Motorgeber angebracht und steht mit einem Prozessor CPU in datenübertragender Verbindung. Bevorzugt unabhängig von dem Antrieb DRV und dem Umrichter CVT werden erste Korrekturparameter CRP ermittelt, die dazu vorgesehen sind, nur den verursachten Motorgeber DSR-internen Fehler der Bestimmung der Winkellage AGL mittels einer ersten Korrekturfunktion CPF zu kompensieren. Eine solche Kalibrierung - also die Ermittlung der ersten Korrekturparameter CRP - kann auf einem gesonderten Prüfstand beispielsweise gegen einen Referenzsensor erfolgen. Grundsätzlich ist auch eine Vorgehensweise analog zu der in der EP 3 669 241 B1 vorgeschlagenen Vorgehensweise - also eine Ermittlung der Korrekturparameter CRP, CRS in einem kräftefreien Betrieb - beispielsweise bei einem freien Austrudeln aus hoher Drehzahl - möglich. Diese Option ist aber vielmehr für die Korrektur der unten erläuterten zweiten Fehlerquelle vorgesehen.

Die zweite Fehlerquelle - also der Versatz ORS der ersten Drehachse AXP zu der zweiten Drehachse AXS - wird mittels zweiter Korrekturparameter CRS abgespeichert in einem zweiten Speicher MES unter Anwendung einer zweiten Korrekturfunktion CSF kompensiert. Der zweite Speicher kann - wie in Figur 1 dargestellt - ein Teil des ersten an dem Motorgeber DRS angebrachten Speichers sein oder auch gegenständlich der Antriebssteuerung DCR zugeordnet sein.

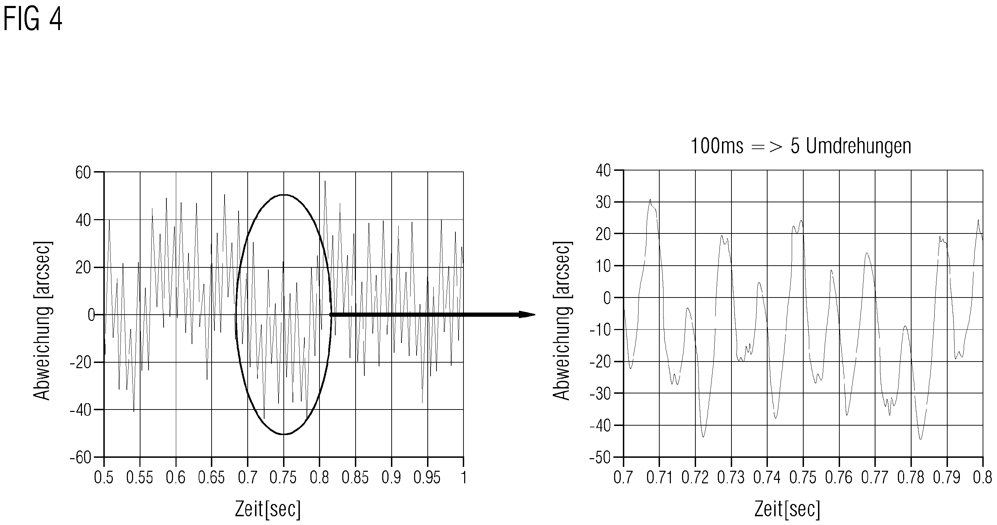

Die jeweils rechnerische Beseitigung der Fehler kann unter Verwendung der ersten und zweiten Korrekturparameter CRP, CRS - ausgelesen aus dem ersten Speicher MEP beziehungsweise zweiten Speicher MES - und unter Anwendung der ersten bzw. zweiten Korrekturfunktion CPF, CSF mittels eines Prozessor CPU erfolgen, wobei der Prozessor CPU gegenständlich der Antriebssteuerung DCR zugeordnet sein kann, wie in Figur 4 dargestellt.

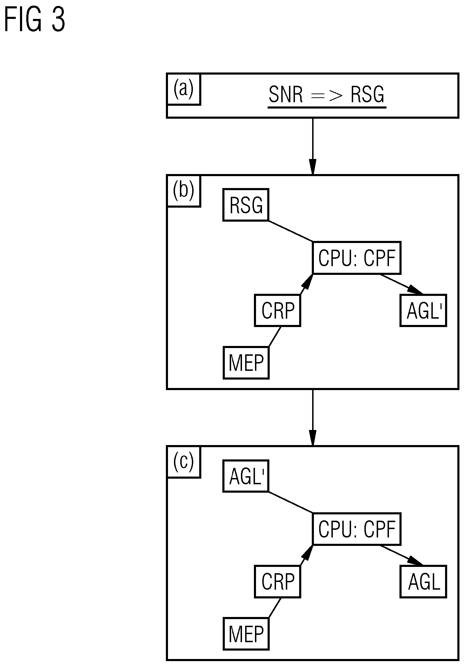

Das Verfahren der Fehlerkompensation ist in Figur 3 schematisch illustriert. Die Fehlerkompensation ist quasi kaskadiert, derart, dass zunächst der Motorgeber DSR-interne Fehler herausgerechnet wird und anschließend diese einfach korrigierte Winkellage AGL' nochmals um den Fehler entstehend aufgrund des Versatzes der Rotorwelle zu der Geberwelle berichtigt wird.

Die Figur 3 illustriert das Vorgehen in drei Schritten (a), (b), (c):
(a) Der erste Korrekturschritt (a) sieht die Aufnahme des Rohmesswerts RSG mittels des Sensors SNR des Motorgebers DRS vor;
(b) In einem zweiten Schritt erfolgt eine erste Fehlerkorrektur unter:
   - Auslesen der ersten Korrekturparameter CRP aus dem ersten Speicher MEP und
   - Berechnen der einfach korrigierten Winkellage AGL' unter Verwendung der ersten Korrekturparameter CRP und unter Anwendung der ersten Korrekturfunktion CPF mittels des Prozessors CPU
(c) In einem dritten Schritt erfolgt eine zweite Fehlerkorrektur unter
   - Auslesen der zweiten Korrekturparameter CRP aus dem zweiten Speicher MES und
   - Berechnen der korrigierten Winkellage AGL unter Verwendung der zweiten Korrekturparameter CRP und unter Anwendung der zweiten Korrekturfunktion CSF mittels des Prozessors CPU.

Diese Korrekturen (b), (c) erfolgen rechnerisch additiv nacheinander, so dass die die einfach korrigierte Winkellage AGL' aufgrund der nochmaligen Korrektur zur vollständig korrigierten Winkellage AGL berechnet wird.

Im Einzelnen erfolgt die zweite Fehlerkorrektur, wie nachfolgend beschrieben und bereits in der EP 3 669 241 B1 ausführlicher erklärt.

Der im Umrichter-Betrieb gemessene Fehler umfasst durch den Einbau des Motorgebers DSR in den Antrieb DRV verursachten Ungenauigkeiten, also Abweichungen der Ausrichtung der Geberwelle IME, Rotorwelle DRS und Kupplung CPL von einer idealen koaxialen Ausrichtung. Eine solche Korrektur, ist genauer als eine Korrektur nur des Motorgeber DSR allein. Eine aufwändige Vermessung mit einem Referenzgeber ist nicht erforderlich. Die Korrektur kann auch additiv erfolgen zu einer bereits erfolgten Kompensation des rein Motorgeber DRVinternen Fehlers auf einem Prüfstand. Mit dem stufenweisen Verfahren lässt sich die Genauigkeit eines Antriebs DRV mit Motorgeber DSR deutlich erhöhen.

Das Verfahren zur Ermittlung der zweiten Korrekturparameter CRS läuft in den folgenden Schritten ab:
- Erzeugen eines Betriebszustands, der eine Bestimmung des Motorgeberfehlers erlaubt,
- Ermittlung des Motorgeberfehlers aus den im Umrichter erfassten Messwerten
- Ablegen des Fehlers zur Motorgeberkorrektur im ersten Speicher MEP des Motorgebers DSR.

Zu dem ersten Schritt ist anzumerken, dass verschiedene Betriebszustände möglich sind, aus denen sich der Motorgeberfehler ermitteln lässt. So kann man den Antrieb aus hoher Drehzahl austrudeln lassen (Impulse wegnehmen) und dabei die Motorgeberlage erfassen. Das Signal wird um seinen Großsignalanteil bereinigt (z.B. least square Polynomkurve schätzen und vom Signal abziehen), und das verbleibende Kleinsignal ist der Motorgeberfehler. Auch kann man den Motorgeber DSR geregelt bei mittlerer Drehzahl betreiben und den Motorgeberfehler aus der Motorgeberlage und dem Motormoment berechnen.

Ein Betriebszustand, der eine sehr genaue Berechnung des Motorgeberfehlers erlaubt, ergibt sich dann, wenn der Antrieb DRV auf eine möglichst hohe Drehzahl gebracht wird und der Drehzahlregler so parametriert ist, dass das Motordrehmoment das Systemverhalten bei Frequenzen der Motordrehzahl und darüber nicht mehr signifikant beeinflusst. Dann kann der Motorgeberfehler durch spektrale Analyse der gemessenen Gleichlaufabweichung ermittelt werden.

Dieses Vorgehen wird in den Figuren 4, 5 und 6 veranschaulicht.

Die Ermittlung der ersten Korrekturparameter CRP erfolgt dadurch, dass der Motorgeber DSR auf einem Prüfstand vermessen wird; die Korrektur wird aus der Differenz zu den Messwerten eines Referenzgebers des Prüfstands ermittelt und im Motorgeber DSR in dem ersten Speicher MEP abgelegt.

Nach der Kompensation des Motorgeber-internen Fehlers limitieren folgende Aspekte die erreichbare Präzision des Gesamtsystems (Motorgeber DSR + Antrieb DRV):
- Der Einfluss der Montage des Motorgeber DSRs in den Antrieb DRV und der Kupplung kann nicht kompensiert werden, da nur der Motorgeber DSR allein auf dem Prüfstand behandelt wird.
- Der Anbau des Motorgebers DSR auf dem Prüfstand erzeugt wiederum einen Fehler, der real im Motorgeber DSR nicht vorhanden ist, jedoch in die Korrekturtabelle mit eingeht und damit die Qualität verschlechtert.

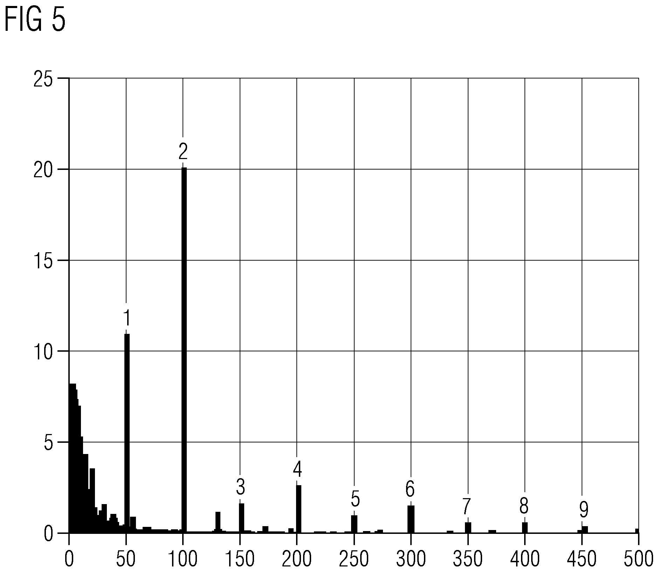

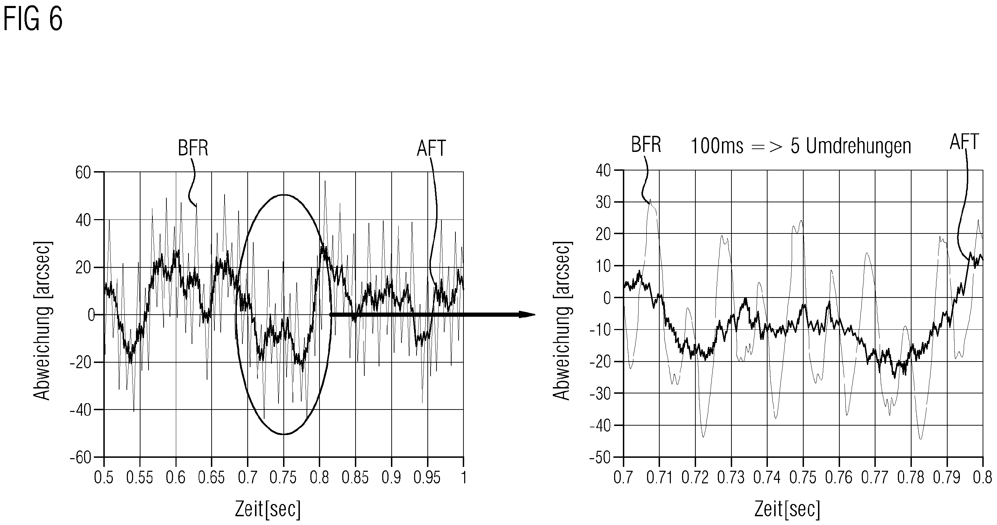

Figur 4 - linke Seite - zeigt den gemessenen Gleichlauffehler eines Servomotors bei 3000 rpm über einem Zeitraum von 0,5 Sekunden. Es sind somit 25 Rotorwellenumdrehungen dargestellt. Der Drehzahlregler ist hinreichend schwach eingestellt, so dass man davon ausgehen kann, dass der physikalische (wirkliche) Gleichlauf des Antriebs DRV über eine einzelne Umdrehung nahezu perfekt ist. Damit ist die Schwankung des Messwertes mit Frequenzen, die niedrigen ganzzahligen Vielfachen der Motordrehzahl entsprechen, ein Fehler des Motorgeber DSR. Das langsame Schwanken des Gleichlauffehlers ist unter anderem der nicht konstanten Reibung mechanischer Lager zuzuordnen. Figur 4 - rechte Seite - zeigt im Detail den Verlauf des Gleichlauffehlers der Winkellage AGL über einen Zeitraum von 100ms - also 5 Rotorwellenumdrehungen. Figur 5 zeigt hierzu die Spektralanalyse des Gleichlauffehlers, dominiert von Fehlern der ersten und zweiten Ordnung. Dementsprechend werden die zweiten Korrekturparameter CRS festgelegt. Figur 6 zeigt die Darstellung der Figur 4 im Vergleich mit dem Motorgeberfehler vor BFR der Korrektur und nach AFT der Korrektur mittels der ersten und zweiten Korrekturparameter CRP, CRS.

Unabhängig vom grammatikalischen Geschlecht eines bestimmten Begriffes sind Personen mit männlicher, weiblicher oder anderer Geschlechteridentität mit umfasst.

## Patentansprüche

**1.** Motorgeber (DSR) für eine Antriebssteuerung (DCR) mit einem Umrichter (CVT), wobei der Motorgeber (DSR) ausgebildet ist, Rohmesswerte (RSG) einer Winkellage (AGL) einer Rotorwelle (DRS) eines Antriebs (DRV) zu ermitteln, **dadurch gekennzeichnet, dass**
der Motorgeber (DSR) einen integrierten Speicher (MEM) aufweist,
wobei in dem Speicher (MEM) erste Korrekturparameter (CRP) zur Korrektur der Winkellage (AGL) mittels einer ersten Korrekturfunktion (CPF) gespeichert sind.

**2.** Motorgeber (DSR) nach Anspruch 1, wobei der Motorgeber (DSR) eine Maßverkörperung (MBD) zur Montage an der Rotorwelle (DRS) aufweist, und einen Sensor (SNR) aufweist zur Bestimmung der Winkellage (AGL) der Rotorwelle (DRS) mittels der Maßverkörperung (MBD),
wobei der Motorgeber ein Motorgeberlager (BDS) und eine Geberwelle (IME) aufweist,
wobei das Motorgeberlager (BDS) eine erste Drehachse (AXP) der Geberwelle (IME) festlegt,
wobei an der Geberwelle (IME) die Maßverkörperung (MBD) angebracht ist,
wobei die ersten Korrekturparameter (CRP) vorgesehen sind, nur einen aufgrund eines Versatzes der ersten Drehachse (AXP) der Maßverkörperung (MBD) zu dem Sensor SNR verursachten Fehler der Bestimmung der Winkellage (AGL) mittels der ersten Korrekturfunktion (CPF) zu kompensieren.

**3.** Antriebssteuerung (DCR) mit einem Motorgeber (DSR) nach Anspruch 1 oder 2, wobei die Antriebssteuerung (DCR) einen Prozessor (CPU) aufweist,
wobei der Speicher (MEM) und der Prozessor (CPU) miteinander ein Funktionsmodul (FMD) ausbilden,
wobei das Funktionsmodul (FMD) derart ausgebildet und vorbereitet ist, dass der Prozessor (CPU) die Rohmesswerte (RSG) des Motorgebers (DSR) mittels der ersten Korrekturparameter (CRP) und der ersten Korrekturfunktion (CPF) zu korrigierten Winkellagen (AGL) umrechnet und die Antriebssteuerung (DCR) auf Basis der korrigierten Winkellagen (AGL) den Antrieb (DRV) steuert.

**4.** Antrieb (DRV) mit einer Antriebssteuerung nach Anspruch 3, wobei die Geberwelle (IME) an dem Motorgeber (DSR) mit der Rotorwelle (DRS) drehsteif verbunden ist, wobei die Rotorwelle (DRS) entlang einer zweiten Drehachse (AXS) drehbar gelagert ist, wobei die erste Drehachse (AXP) und die zweite Drehachse (AXS) zueinander einen Versatz (ORS) aufweisen, wobei zweite Korrekturparameter (CRS) in einem zweiten Speicher (MES) abgespeichert sind, wobei die zweiten Korrekturparameter (CRP) vorgesehen sind, nur einen aufgrund des Versatzes der zweiten Drehachse (AXS) zu der ersten Drehachse (AXP) verursachten Fehler der Bestimmung der Winkellage (AGL) der Rotorwelle (DRS) mittels einer zweiten Korrekturfunktion (CPF) zu kompensieren.

**5.** Antrieb (DRV) nach Anspruch 4, wobei ein Kalibriermodul (KMD) derart ausgebildet ist, dass ein Kalibriermodus (CLM) zur Kalibrierung (CLR) der Ermittlung (DTM) der Winkellage (AGL) der Rotorwelle (DRS) aktivierbar (ACT) ist,
wobei die Kalibrierung (CLR) eine Ermittlung (DTM) der zweiten Korrekturparameter (CRS) der zweiten Korrekturfunktion (CSF) umfasst,
wobei das Funktionsmodul (FMD) zum Zweck der Kalibrierung (CLR) für die Durchführung folgender Schritte vorbereitet ist:
(a) Aktivierung (ACT) des Kalibriermodus (CLM) des Kalibriermoduls (KMD),
(b) Ermittlung (DTM) der zweiten Korrekturparameter (CRP),
(c) Speicherung (STR) der zweiten Korrekturparameter (CRP) in einem zweiten Speicher (MES).

**4.** Antrieb (DRV) nach dem der vorhergehenden Ansprüche, wobei das Kalibriermodul (KMD) derart ausgebildet ist, dass für die Aktivierung (ACT) des Kalibriermodus (CLM) des Kalibriermodul (KMD) ein für die Kalibrierung (CLR) geeigneter Betriebszustand (OPC) des Antriebs (DRV) als eine notwendige Bedingung erfüllt sein muss.

**5.** Antrieb (DRV) nach einem der vorhergehenden Ansprüche, wobei der geeignete Betriebszustand (OPC) vorsieht, dass der Antrieb (DRV) auf eine Drehzahl (RPM) oberhalb einer Mindestdrehzahl (MRP) beschleunigt wird und die Antriebssteuerung (DCR) derart parametriert ist, dass während der Kalibrierung (CLR) von der Antriebssteuerung (DCR) keine Krafteinflüsse auf die Rotorwelle (DRS) veranlasst werden.

**6.** Antrieb (DRV) nach einem der vorhergehenden Ansprüche, wobei die Antriebssteuerung (DCR) während der Kalibrierung (CLR) anhand der jeweiligen Rohmesswerte (RSG) jeweils prüft, ob eine aktuelle Drehzahl (RPM) der Rotorwelle (DRS) eine Minimaldrehzahl (RPN) erreicht oder unterschreitet, und bei Erreichen oder Unterschreiten der Minimaldrehzahl (RPN) das Ermitteln und Zwischenspeichern der Rohmesswerte (RSG) beendet und der Prozessor (CPU) die zweiten Korrekturparameter (CRP) aus den bis dahin gemessenen Rohmesswerten (RSG) ermittelt.
